# EUROPÄISCHE PATENTSCHRIFT

(11) **EP 0 757 421 B1**
(45) Veröffentlichungstag und Bekanntmachung des Hinweises auf die Patenterteilung: **25.09.2002**
(21) Anmeldenummer: 96110563.2
(22) Anmeldetag: 29.06.1996
(51) Int. Cl.: H02H 9/08, H02H 9/02, H02H 7/26, H02H 9/00

(54) **Anordnung zur Begrenzung des Kurzschlussstromes in 3-phasigen Drehstromnetzen**
Equipment for limitation of fault current in 3-phase networks
Dispositif pour la limitation de courant de court-circuit en réseau triphasé

(30) Priorität: 17.07.1995 DE 19526062
(43) Veröffentlichungstag der Anmeldung: 05.02.1997
(73) Patentinhaber: wind strom frisia GmbH, 32423 Minden (DE)
(72) Erfinder: Hennchen, Norbert, Dipl.-Phys., 28239 Bremen (DE)
(74) Vertreter: Braun, Dieter, Dipl.-Ing.

(56) Entgegenhaltungen:
- DD-A- 135 664
- DD-A- 146 727
- DE-A- 3 842 920
- DE-A- 4 419 945
- DE-B- 2 456 073
- US-A- 4 234 901

## Beschreibung

Die Erfindung bezieht sich auf eine Anordnung zur Begrenzung des Kurzschlußstromes in 3-phasigen Drehstromnetzen mit einem oder mehreren angeschlossenen Generatoren/Motoren, wobei in jeder zu einem Generator/Motor führenden Phase des Drehstromnetzes wenigstens ein Paar Serienschalter angeordnet ist und eine Meßeinrichtung zur Ermittlung eines Kurzschlußfalles und Sperrung der Serienschalter vorgesehen ist.

In Stromnetzen ist es erforderlich, sicherzustellen, beim Auftreten eines Kurzschlusses den Beitrag, den im Stromnetz betriebene Generatoren bzw. Motoren liefern, sowohl zeitlich als auch in der Höhe zu begrenzen. Hierzu werden vorzugsweise mechanische Freischalter eingesetzt, die thermisch oder elektromagnetisch ausgelöst werden. Diese Schalter sind, um die geforderten kurzen Schaltzeiten zu erreichen, technisch sehr aufwendig ausgebildet. Dennoch sind lediglich Schaltzeiten von einigen Millisekunden erreichbar, die im Grunde zu lang sind und dadurch die Funktionsfähigkeit der Stromversorgungsnetze gefährden können. Elektronische Schalter konnten sich nicht durchsetzen, da bei Halbleiterschaltelementen keine mechanische Trennung erfolgt und daher derartige Lösungen von der Zuverlässigkeit her nicht geeignet erschienen.

Eine Schutzanordnung zur Begrenzung des Kurzschlußstromes in 3-phasigen Drehstromnetzen mit einem angeschlossenen Generator ist in der DE 24 56 073 B beschrieben.

In der US 4234901 A ist auch bereits eine Anordnung zur Begrenzung des Kurzschlußstromes in 3-phasigen Drehstromnetzen, mit einem angeschlossenen Generator/Motor beschrieben, wobei in jeder zu dem Generator/Motor führenden Phase des Drehstromnetzes wenigstens ein Paar Serienschalter angeordnet ist und eine Meßeinrichtung zur Ermittlung eines Kurzschlußfalles und Sperrung der Serienschalter vorgesehen ist.

Der Erfindung liegt die Aufgabe zugrunde, sicherzustellen, daß in 3-phasigen Drehstromnetzen mit einem oder mehreren Generatoren/Motoren beim Auftreten eines Kurzschlusses der Beitrag, den diese im Stromnetz betriebenen Generatoren/Motoren liefern, sowohl zeitlich als auch in der Höhe begrenzt wird.

Diese Aufgabe wird erfindungsgemäß durch die Merkmale des Anspruchs 1 gelöst. Dadurch, daß die Serienschalter von anti-parallel geschalteten Halbleiterschaltelementen gebildet und die Phasen über zwischen den Serienschaltem und dem Generator/Motor angeordnete Kurzschlußschalter miteinander verbunden sind sowie daß eine Meßeinrichtung vorgesehen ist, die die Differenz der Phasenströme ermittelt und im Kurzschlußfall abhängig von dieser Differenz die Kurzschlußschalter derart ansteuert, daß der Strom des Generators/Motors abgeleitet wird, ist erreicht worden, daß im Kurzschlußfall der Strom des Motors/Generators nicht an die Serienschalter gelangt, deren Funktion somit nicht beeinträchtigt wird und daß der Strom nicht in das Netz gelangt. Leistungsabhängig sind sehr kurze Schaltzeiten von 0,7 ms und kleiner erreichbar. Zusätzlich kann ein mechanischer Kontakt geöffnet werden.

In weiterer Ausgestaltung der Erfindung ist es vorgesehen, daß die Kurzschlußschalter von anti-parallel geschalteten Halbleiterschaltelementen gebildet sind. Gemäß einer bevorzugten Ausführungsform der Erfindung sind die Serienschalter und die Kurzschlußschalter von Thyristoren gebildet. Eine derartig aufgebaute Anordnung zeichnet sich durch eine absolut zuverlässige Funktion aus, wobei die Herstellkosten im Vergleich zu herkömmlichen Freischaltern sehr niedrig liegen.

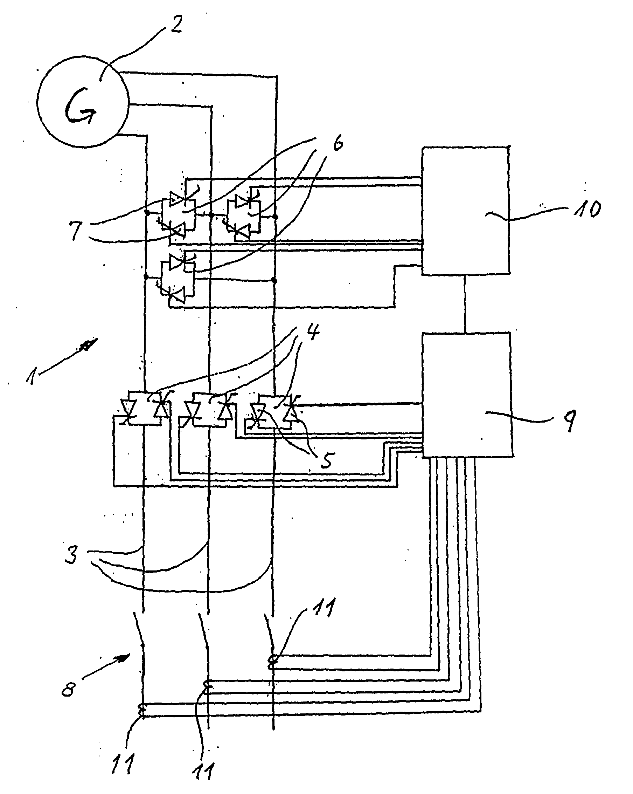

In der Zeichnung ist ein Ausführungsbeispiel der Erfindung dargestellt und wird im folgenden näher beschrieben.

In der Figur der Zeichnung ist mit 1 eine Anordnung zur Begrenzung eines Kurzschlußstromes bezeichnet. In jeder zu einem Generator/Motor 2 führenden Phase 3 des Drehstromnetzes ist wenigstens ein Paar Serienschalter 4 angeordnet, die als anti-parallel geschaltete Thyristoren 5 ausgebildet sind. Zwischen den Serienschaltem 4 und den Generatoren/Motoren 2 sind die Phasen 3 über Kurzschlußschalter 6 verbunden, die gleichfalls als anti-parallel geschaltete Thyristoren 7 ausgebildet sind. Über Hauptschalter 8 kann der Generator/Motor 2 vom Stromnetz getrennt werden. Anstelle der als anti-parallel geschaltete Halbleiterschaltelemente ausgebildeten Kurzschlußschalter 6 können alternativ durchaus auch Gleichrichter mit einer nachgeschalteten Kapazität oder aber Widerstände eingesetzt werden. Die Serienschalter 4 können auch als anti-parallel geschaltete Transistoren ausgebildet sein. Die Anordnung 1 weist im übrigen eine elektronische Meßeinrichtung 9 zum Messen des Strombetrages und/oder der Stromanstiegsgeschwindigkeit in den Phasen 3 auf. Eine weitere elektronische Meßeinrichtung 10 ermittelt die Differenz der Ströme in den Phasen 3. Die Messungen erfolgen mittels an den Phasen 3 angeordneter Stromwandler 11. Derartige Meßeinrichtungen 9 und 10, sind dem Fachmann an sich bekannt.

Die erfindungsgemäße elektronische Schaltung erkennt beim Überschreiten des Nennstromes und/oder der Stromanstiegsgeschwindigkeit des Generators/Motors 2 mittels an sich bekannter Mittel einen Kurzschluß im Netz. Sofern im Drehstromnetz ein Kurzschlußfall eintritt, so erkennt die elektronische Meßeinrichtung 9 anhand des Strombetrages und/oder der Stromanstiegsgeschwindigkeit in den Phasen 3 diesen Kurzschluß und bewirkt, daß die Serienschalter 4 augenblicklich elektronisch gesperrt werden. Da es sich um Thyristoren 5 handelt, erfolgt eine sehr schnelle Sperrung, normalerweise beim Strom-0-Durchgang der Sinuswelle. Die Sperrung wird zusätzlich beschleunigt, indem die Meßeinrichtung 10 gleichzeitig mit kurzer Verzögerung die Differenz der Ströme in den Phasen 3 ermittelt und abhängig von dieser Differenz die Thyristoren 7 der Kurzschlußschalter 6 derart ansteuert und öffnet, daß kein Strom der Generatoren/Motoren 2 aus einer anderen Phase 3 in den Kurzschluß gespeist werden kann. Der Strom wird jeweils abgeleitet. Zusätzlich kann ein mechanischer Kontakt geöffnet werden.

Aufgrund ihres einfachen und kostengünstigen Aufbaus ist die erfindungsgemäße Anordnung als Einrichtung zur Begrenzung des Kurzschlußstromes zum Einsatz bei Generatoren und Motoren aller Art, beispielsweise insbesondere auch bei Windgeneratoren, geeignet.

## Patentansprüche

1. Anordnung (1) zur Begrenzung des Kurzschlußstromes in 3-phasigen Drehstromnetzen, mit wenigstens einem angeschlossenen Generator/Motor (2), wobei in jeder zu einem Generator/Motor (2) führenden Phase (3) des Drehstromnetzes wenigstens ein Paar Serienschalter (4) angeordnet ist und eine Meßeinrichtung (9) zur Ermittlung eines Kurzschlußfalles und Sperrung der Serienschalter (4) vorgesehen ist, **dadurch gekennzeichnet, daß** die Serienschalter (4) von anti-parallel geschalteten Halbleiterschaltelementen gebildet und die Phasen (3) über zwischen den Serienschaltern (4) und dem Generator/Motor (2) angeordnete Kurzschlußschalter (6) miteinander verbunden sind sowie daß eine Meßeinrichtung (10) vorgesehen ist, die die Differenz der Phasenströme ermittelt und im Kurzschlußfall abhängig von dieser Differenz die Kurzschlußschalter (6) derart ansteuert, daß der Strom des Generators/Motors (2) abgeleitet wird.

2. Anordnung (1) nach Anspruch1, **dadurch gekennzeichnet, daß** die Kurzschlußschalter (6) von anti-parallel geschalteten Halbleiterschaltelementen gebildet sind.

3. Anordnung (1) nach wenigstens einem der vorhergehenden Ansprüche, **dadurch gekennzeichnet, daß** die Serienschalter (4) und die Kurzschlußschalter (6) von Thyristoren (5, 7) gebildet sind.

## Claims

1. An arrangement (1) for limiting the short circuit current in 3-phase alternating current networks, with at least one connected generator/motor (2), whereby in each phase (3) leading to the generator/motor (2) of the alternating current network at least one pair of series switching circuits (4) are arranged and a measuring device (9) for detecting a short circuit condition and the blocking of the series switching circuit (4), **characterised in that** the series switching circuit (4) is formed by anti-parallel connected semiconductor elements and the phases (3) are connected together by short circuit switches (6) arranged between the series switching circuits (4) and the generator/motor (2) and that a measuring device (10) is provided, which calculates the differences of the phase currents and in the event of a short circuit controls the short circuit switches (6) in such a manner that the current of the generator/motor (2) is diverted.

2. An arrangement (1) in accordance with Claim 1 **characterised in that** the short circuit switches (6) are formed from anti-parallel connected semiconductor elements.

3. An arrangement (1) in accordance with at least one of the foregoing Claims **characterised in that** the series switching circuits (4) and the short circuit switches (6) are formed from thyristors (5, 7)

## Revendications

1. Dispositif (1) de limitation du courant de court-circuit dans des réseaux de courant triphasé à 3 phases, auquel est raccordé au moins un moto-générateur (2), un couple au moins de commutateurs série (4) étant disposé dans chaque phase (3) du réseau de courant triphasé conduisant vers un moto-générateur (2), et un dispositif de mesure (9) destiné à la détermination d'un cas de court-circuit et au blocage des commutateurs série (4) étant prévu, **caractérisé en ce que** les commutateurs série (4) sont constitués d'éléments de commutation à semiconducteurs branchés de façon anti-parallèle, et **en ce que** les phases (3) sont reliées entre elles par l'intermédiaire de commutateurs de court-circuit (6) disposés entre les commutateurs série (4) et le moto-générateur (2), et **en ce qu'**il est prévu un dispositif de mesure (10) qui détermine la différence des courants de phase et qui, en cas de court-circuit, commande les commutateurs de court-circuit (6) en fonction de cette différence de telle sorte que le courant du moto-générateur (2) soit dérivé.

2. Dispositif (1) selon la revendication 1, **caractérisé en ce que** les commutateurs de court-circuit (6) sont constitués d'éléments de commutation à semiconducteurs branchés de façon antiparallèle.

3. Dispositif (1) selon l'une au moins des revendications précédentes, **caractérisé en ce que** les commutateurs série (4) et les commutateurs de court-circuit (6) sont constitués de thyristors (5, 7).
